# EUROPÄISCHE PATENTANMELDUNG

(11) **EP 4 451 526 A1**
(43) Veröffentlichungstag der Anmeldung: **23.10.2024**
(21) Anmeldenummer: 23168512.4
(22) Anmeldetag: 18.04.2023
(51) Int. Cl.: H02K 15/02

(54) **VERFAHREN ZUM FÜGEN VON ELEKTROBLECHLAMELLEN SOWIE VORRICHTUNG ZUR DURCHFÜHRUNG EINES SOLCHEN VERFAHRENS**

(71) Anmelder: HSP Hochspannungsgeräte GmbH, 53842 Troisdorf (DE)
(72) Erfinder: Koeck, Klaus, 4202 Hellmonsödt (AT); Pointner, Klaus, 4040 Linz (AT)
(74) Vertreter: Betten & Resch

(57) **Zusammenfassung**

Die Erfindung betrifft ein Verfahren zum Fügen einer Vielzahl von Elektroblechlamellen (13) zu einem Blechlamellenpaket, bei dem mit Elektroblechlack beschichtete Elektroblechlamellen (13) gestapelt und im gestapelten Zustand unter Einwirkung von Druck und Hitze miteinander verbacken werden, dadurch gekennzeichnet, dass der zu verbackende Blechlamellenstapel (5) in einen als Druckbehälter ausgebildeten Kessel (2) eingesetzt, der Kessel (2) hermetisch verriegelt und insbesondere vollständig mit einem flüssigen Medium gefüllt wird, woraufhin das flüssige Medium auf eine vorbestimmte Temperatur erhitzt und die Elektroblechlamellen (13) über eine vorbestimmte Zeitdauer bei einem vorbestimmten Druck miteinander verbacken werden. Ferner betrifft die Erfindung eine Vorrichtung (1) zur Durchführung eines solchen Verfahrens.

## Beschreibung

Die vorliegende Erfindung betrifft ein Verfahren zum Fügen einer Vielzahl von Elektroblechlamellen zu einem Blechlamellenpaket, bei dem mit Elektroblechlack beschichtete Elektroblechlamellen gestapelt und im gestapelten Zustand unter Einwirkung von Druck und Hitze miteinander verbacken werden. Ferner betrifft die vorliegende Erfindung eine Vorrichtung zur Durchführung eines solchen Verfahrens.

Im Stand der Technik ist es bekannt, magnetische Kreise für elektrische Maschinen, die auch als Eisenkerne bezeichnet werden, aus einer Vielzahl von zu einem Blechlamellenpaket gefügten Elektroblechlamellen herzustellen. Als Fügeverfahren kommen Verkleben, Schweißen, Klammern und Stanzpakettieren zum Einsatz. Beim Verkleben werden die Blechlamellen gestapelt, wobei benachbarte Elektroblechlamellen vollflächig mit einem Klebstoff verklebt werden. Beim Schweißen werden die Blechlamellen lose gestapelt, woraufhin sie meist von außen über Schweißnähte miteinander verbunden werden. Beim Klammern werden anstelle von Schweißnähten mechanische Klammern verwendet, die von außen das ElektroBlechlamellenpaket umgreifen und dieses zusammenhalten. Beim Stanzpakettieren werden die lose übereinander gestapelten ElektroBlechlamellenpakete über Nut-Federverbindungen zusammengehalten. In den letzten Jahren hat sich ferner das so genannte Backlackverfahren etabliert, bei dem die Elektroblechlamellen mit einem Elektroblechlack, auch als Backlack bezeichnet, beschichtet, dann gestapelt und im gestapelten Zustand unter Einwirkung von Druck und Hitze miteinander verbacken werden. Die für das Verbacken der Elektroblechlamellen erforderliche Temperatur wird über einen Ofen bereitgestellt, in den die Elektroblechlamellen im gestapelten Zustand eingesetzt werden. Der während des Fügens erforderliche Druck wird der Elektroblechlamellen während des Verbackens erforderliche Druck wird über Presseinrichtungen realisiert, die während des Backprozesses die gestapelten Elektroblechlamellen auf Druck beaufschlagen. Als Presseinrichtungen kommen beispielsweise Presseisen zum Einsatz, die von außen auf das Blechlamellenpaket wirken. Auch ist die Verwendung von Pressbolzen bekannt, die sich durch in den Elektroblechlamellen vorgesehene Durchgangsöffnungen erstrecken. Um zu verhindern, dass die benötigten Presskräfte aufgrund von Schrumpfung der Laminathöhe über den Backprozess nachlassen, werden die Presseinrichtungen meist mit Federelementen gepaart, die den Schrumpfprozess ausgleichen sollen. Der unter Einwirkung von Hitze erweichende Backlack härtet beim Abkühlen aus, wodurch die gestapelten Elektrobleche zu einem festen Paket gefügt werden. Die Presseinrichtungen werden nach dem Aushärten entfernt. Ein wesentlicher Vorteil des Backlackverfahrens besteht darin, dass die einzelnen Elektroblechlamellen dank des vollflächigen Verbackens sehr gut gegeneinander isoliert werden, wodurch Wirbelstromverluste und Kurzschlüsse vermieden werden. Ferner fächern sich die Elektroblechlamellen nicht auf, wodurch Vibrationen und Geräuschentwicklung gegenüber den herkömmlichen Verfahren deutlich reduziert werden. Darüber hinaus werden eine sehr gute Stabilität und Festigkeit erzielt. Schließlich ist ein guter Korrosionsschutz gegeben, da Feuchtigkeit nicht zwischen die gefügten Elektrobleche gelangen kann. Ein Nachteil des Backlackprozesses besteht allerdings darin, dass sich mit klassischen Presseinrichtungen bei komplexeren Geometrien, wie beispielsweise bei Kreissegmenten, Kernscheiben, Polschuhen oder abgestuften Elementen, über die Flächen der Elektroblechlamellen keine konstanten Pressdrücke realisieren lassen, weshalb das Verfahren nicht für alle Geometrien geeignet ist. Auch die Kompensation der Schrumpfung durch den Einsatz von Federelementen ist sehr anspruchsvoll, was häufig ebenfalls mit suboptimalen Arbeitsergebnissen einhergeht.

Ausgehend von diesem Stand der Technik ist es eine Aufgabe der vorliegenden Erfindung, ein alternatives Verfahren der eingangs genannten Art zu schaffen, mit dem die genannten Nachteile zumindest teilweise beseitigt werden.

Zur Lösung dieser Aufgabe schafft die vorliegende Erfindung ein Verfahren zum Fügen einer Vielzahl von Elektroblechlamellen zu einem Blechlamellenpaket, bei dem mit Elektroblechlack beschichtete Elektroblechlamellen gestapelt und im gestapelten Zustand unter Einwirkung von Druck und Hitze miteinander verbacken werden, wobei der zu verbackende Blechlamellenstapel in einen als Druckbehälter ausgebildeten Kessel eingesetzt, der Kessel hermetisch verriegelt und insbesondere vollständig mit einem flüssigen Medium gefüllt wird, woraufhin das flüssige Medium auf eine vorbestimmte Temperatur erhitzt und die Elektroblechlamellen über eine vorbestimmte Zeitdauer bei einem vorbestimmten Druck miteinander verbacken werden.

Das erfindungsgemäße Verfahren zeichnet sich dadurch aus, dass der Backprozess innerhalb eines mit einem flüssigen Medium gefüllten Kessels durchgeführt wird. Durch Erhitzen des flüssigen Mediums wird die für den Backprozess erforderliche Temperatur bereitgestellt. Mit Erhöhung der Temperatur erhöht sich innerhalb des Kessels auch der Druck, der über die gesamte Dauer des Fügeprozesses konstant und einheitlich auf die gestapelten Elektroblechlamellen einwirkt. Der Einsatz klassischer Presseinrichtungen ist entsprechend nicht erforderlich. Auch werden die durch den Überdruck erzeugten Presskräfte nicht durch die über den Backprozess schrumpfende Laminathöhe beeinträchtigt. Im Ergebnis können mit dem erfindungsgemäßen Verfahren optimal gefügte Elektroblechlamellenpakete hergestellt werden.

Bei dem flüssigen Medium handelt es sich bevorzugt um Wasser, wobei natürlich auch viele andere flüssige Medien geeignet sind. Wasser ist jedoch bezogen auf die Verfügbarkeit und Umweltverträglichkeit präferiert.

Gemäß einer Ausgestaltung der vorliegenden Erfindung werden die gestapelten Elektroblechlamellen vor dem Einsetzen in den Kessel insbesondere unter Verwendung eines Klebstoffes vorgeheftet. Auf diese Weise wird verhindert, dass sich die gewünschte Ausrichtung der zu fügenden gestapelten Elektroblechlamellen während des Einsetzens in den Kessel verändern kann.

Bevorzugt werden die gestapelten Elektroblechlamellen innerhalb des Kessels unter Verwendung separater Stützstrukturen zueinander ausgerichtet. Die Stützstrukturen folgen insbesondere der Außenkontur des Elektroblechlamellenstapels, um eine Veränderung der gewünschten Ausrichtung zu verhindern.

Gemäß einer Ausgestaltung des erfindungsgemäßen Verfahrens werden die gestapelten Elektroblechlamellen vor dem Einsetzen in den Kessel in einer Folie eingeschweißt. Die Folie dient zum einen dazu, die gewünschte Ausrichtung des Elektroblechlamellenpaketes beim Einsetzen in den Kessel beizubehalten. Zum anderen verhindert die Folie einen direkten Kontakt der Elektroblechlamellen mit dem flüssigen Medium, wodurch negative Wechselwirkungen zwischen den Elektroblechlamellen und dem flüssigen Medium ausgeschlossen sind.

Vorteilhaft liegt die vorbestimmte Temperatur in einem Bereich von 150°C und 250°C. Innerhalb dieses Temperaturbereiches werden mit auf dem Markt derzeit erhältlichen Elektroblechlacken die besten Ergebnisse erzielt.

Bevorzugt liegt der innerhalb des Kessels während des Verbackens vorherrschende vorbestimmte Druck in einem Bereich von 5 bis 30 bar. Grundsätzlich gilt, dass die Festigkeit des mit dem erfindungsgemäßen Verfahren hergestellten Blechlamellenstapels mit steigendem Druck zunimmt. Drücke unterhalb von 5 bar haben zu suboptimalen Ergebnissen geführt. Bei Drücken oberhalb von 30 bar konnten keine nennenswerten Steigerungen der Festigkeit mehr festgestellt werden.

Gemäß einer Ausgestaltung der vorliegenden Erfindung wird der innerhalb des Kessels vorherrschende Druck über eine an den Kessel angeschlossene Druckerhöhungseinrichtung auf den vorbestimmten Druck erhöht. Über eine solche Druckerhöhungseinrichtung lassen sich Temperatur und Druck separat voneinander einstellen.

Die vorbestimmte Zeitdauer liegt bevorzugt in einem Bereich zwischen 20 min und 3 Stunden. Die vorbestimmte Zeitdauer ist dabei sowohl abhängig von dem verwendeten Backlack als auch temperatur- und druckabhängig.

Ferner schafft die vorliegende Erfindung zur Lösung der eingangs genannten Aufgabe eine Vorrichtung zur Durchführung eines erfindungsgemäßen Verfahrens, umfassend einen als Druckbehälter ausgebildeten Kessel mit einem Aufnahmeraum zur Aufnahme zu verbackender Blechlamellenstapel, der über eine hermetisch verschließbare Beladeöffnung zugänglich ist, einem Reservoir für ein flüssiges Medium, das über eine Leitung mit dem Aufnahmeraum verbunden ist, einer Pumpen- und Ventilsteuereinrichtung, die dazu ausgelegt ist, den Aufnahmeraum mit flüssigem Medium aus dem Reservoir zu befüllen und optional wieder zu entleeren, und einer Heizeinrichtung, die dazu ausgelegt ist, im Aufnahmeraum vorhandenes flüssiges Medium zu erhitzen.

Gemäß einer Ausgestaltung der vorliegenden Erfindung weist die Vorrichtung ein mit einem Heizfluid gefüllten Heizfluidraum auf, wobei die Heizeinrichtung, der Heizfluidraum und der Aufnahmeraum derart angeordnet sind, dass über die Heizeinrichtung das Heizfluid erhitzt wird, das wiederum seine Wärme an das im Aufnahmeraum enthaltene flüssige Medium abgibt.

Vorteilhaft ist eine mit dem Aufnahmeraum verbundene Druckerhöhungseinrichtung vorgesehen, die dazu ausgelegt ist, den innerhalb des Aufnahmeraums vorherrschen Druck zu erhöhen.

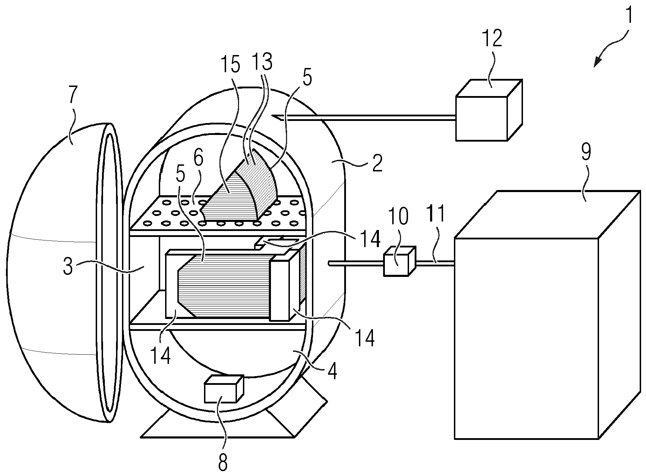

Weitere Merkmale und Vorteile der vorliegenden Erfindung werden anhand der nachfolgenden Beschreibung unter Bezugnahme auf die beiliegende Zeichnung deutlich, die eine schematische Ansicht einer Vorrichtung gemäß einer Ausführungsform der vorliegenden Erfindung zeigt, die zur Durchführung eines erfindungsgemäßen Verfahrens eingesetzt wird.

Die in der Figur nur sehr schematisch dargestellte Vorrichtung 1 umfasst einen als Druckbehälter ausgebildeten Kessel 2 mit einem Aufnahmeraum 3 und einem darunter und getrennt von diesem vorgesehenen Heizfluidraum 4. Der zur Aufnahme zu verbackender Blechlamellenstapel 5 dienende Aufnahmeraum 3, der vorliegend regalartig in zwei übereinanderliegende Ebenen unterteilt ist, die voneinander durch ein Lochblech 6 getrennt sind, ist über Beladeöffnung zugänglich, die vorliegend durch eine Tür 7 hermetisch verschließbar ist. Der heizfluidraum 4 nimmt ein über eine Heizeinrichtung 8 erhitzbares Heizfluid auf. Bei der Heizeinrichtung 8 kann es sich um einen Gasbrenner, einen Heizstab oder dergleichen handeln. Ein Reservoir 9 für ein flüssiges Medium ist über eine mit einer Pumpen- und Ventilsteuereinrichtung 10 versehene Leitung 11 mit dem Aufnahmeraum 3 verbunden, wobei die Pumpenund Ventilsteuereinrichtung 10 dazu ausgelegt ist, den Aufnahmeraum 3 mit flüssigem Medium aus dem Reservoir 9 zu befüllen und wieder zu entleeren. Ferner umfasst die Vorrichtung 1 vorliegend eine mit dem Aufnahmeraum 3 verbundene Druckerhöhungseinrichtung 12, die dazu ausgelegt ist, den innerhalb des Aufnahmeraums 3 vorherrschen Druck zu erhöhen.

Nachfolgend wird ein unter Verwendung der Vorrichtung 1 durchgeführtes Verfahren gemäß einer Ausführungsform der vorliegenden Erfindung beschrieben, das dazu dient, eine Vielzahl von Elektroblechlamellen 13 zu einem Blechlamellenpaket zu fügen.

In einem ersten Schritt werden die zu verbackenden Blechlamellenstapel in den Aufnahmeraum 3 des Kessels 2 eingesetzt und der Aufnahmeraum 3 im Anschluss durch Schließen der Tür 7 hermetisch verriegelt. Die Blechlamellenstapel bestehen jeweils aus einer Vielzahl von Elektroblechlamellen 13, die mit einem Backlack beschichtet sind. Bei dem Backlack handelt es sich vorliegend um den von der Firma Rembrandtin erhältlichen Backlack EB 549, wobei grundsätzlich aber auch andere Backlacke eingesetzt werden können. Zur Aufrechterhaltung der Ausrichtung der übereinander gelegten Elektroblechlamellen 13 während des Fügevorgangs können die gestapelten Elektroblechlamellen 13 innerhalb des Kessels 2 unter Verwendung separater Stützstrukturen 14 zueinander ausgerichtet werden, wie es in der Figur anhand des im unteren Fach des Aufnahmeraums 3 angeordneten Blechlamellenstapels dargestellt ist. Auch können die gestapelten Elektroblechlamellen 13 vor dem Einsetzen in den Kessel 2 in einer Folie 15 eingeschweißt werden, wie es anhand des im oberen Fach des Aufnahmeraums 3 angeordneten Blechlamellenstapels gezeigt ist.

In einem weiteren Schritt wird der Aufnahmeraum 3 bei der vorliegenden Ausführungsform des erfindungsgemäßen Verfahrens vollständig mit einem flüssigen Medium gefüllt, bei dem es sich bevorzugt um Wasser handelt. Anschließend wird das flüssige Medium unter Verwendung der Heizeinrichtung 8 auf eine vorbestimmte Temperatur erhitzt, wobei die Heizeinrichtung 8 zunächst das Heizfluid erhitzt, das wiederum seine Wärme an das im Aufnahmeraum 3 enthaltene flüssige Medium überträgt. Während des Erhitzens des flüssigen Mediums steigt auch der Druck innerhalb des Aufnahmeraums 3 an, der über die Druckerhöhungseinrichtung 12 weiter erhöht werden kann, wenn dies gewünscht ist.

Nach Erreichen einer vorbestimmten Temperatur und eines vorbestimmten Druckes werden die Elektroblechlamellen 13 insbesondere bei konstanter Temperatur und konstantem Druck über eine vorbestimmte Zeitdauer miteinander verbacken.

Nach Ablauf der vorbestimmten Zeitdauer wird das flüssige Medium aus dem Aufnahmeraum 3 abgelassen und der Druck auf Umgebungsdruck gesenkt, woraufhin die fertig verbackenen Blechlamellenpakete dem Aufnahmeraum 3 entnommen werden können.

Die vorbestimmte Temperatur, der vorbestimmte Druck und die vorbestimmte Zeitdauer werden in Abhängigkeit von dem verwendeten Backlack gewählt, wobei die vorbestimmte Temperatur bevorzugt in einem Bereich von 150°C und 250°C liegt und/oder der vorbestimmte Druck bevorzugt in einem Bereich von 5 bis 30 bar liegt und/oder die vorbestimmte Zeitdauer bevorzugt in einem Bereich zwischen 20 min und 3 Stunden liegt. Innerhalb dieser Bereiche konnten bei der Durchführung von Tests gemäß DIN EN 1464 sehr gute Schälwiderstände erzielt werden. Vorliegend wurde eine vorbestimmte Temperatur von 180°C, ein vorbestimmter Druck von 8 bar und eine vorbestimmte Zeitdauer von 110 min gewählt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Vorrichtung
- 2: Kessel
- 3: Aufnahmeraum
- 4: Heizfluidraum
- 5: Blechlamellenstapel
- 6: Lochblech
- 7: Tür
- 8: Heizeinrichtung
- 9: Reservoir
- 10: Pumpen- und Ventilsteuerung
- 11: Leitung
- 12: Druckerhöhungseinrichtung
- 13: Elektroblechlamelle
- 14: Stützstruktur
- 15: Folie

## Patentansprüche

1. Verfahren zum Fügen einer Vielzahl von Elektroblechlamellen (13) zu einem Blechlamellenpaket, bei dem mit Elektroblechlack beschichtete Elektroblechlamellen (13) gestapelt und im gestapelten Zustand unter Einwirkung von Druck und Hitze miteinander verbacken werden, **dadurch gekennzeichnet, dass** der zu verbackende Blechlamellenstapel (5) in einen als Druckbehälter ausgebildeten Kessel (2) eingesetzt, der Kessel (2) hermetisch verriegelt und insbesondere vollständig mit einem flüssigen Medium gefüllt wird, woraufhin das flüssige Medium auf eine vorbestimmte Temperatur erhitzt und die Elektroblechlamellen (13) über eine vorbestimmte Zeitdauer bei einem vorbestimmten Druck miteinander verbacken werden.

2. Verfahren nach Anspruch 1, **dadurch gekennzeichnet, dass** es sich bei dem flüssigen Medium um Wasser handelt.

3. Verfahren nach Anspruch 1 oder 2, **dadurch gekennzeichnet, dass** die gestapelten Elektroblechlamellen (13) vor dem Einsetzen in den Kessel (2) insbesondere unter Verwendung eines Klebstoffes vorgeheftet werden.

4. Verfahren nach einem der vorhergehenden Ansprüche, **dadurch gekennzeichnet, dass** die gestapelten Elektroblechlamellen (13) innerhalb des Kessels (2) unter Verwendung separater Stützstrukturen (14) zueinander ausgerichtet werden.

5. Verfahren nach einem der vorhergehenden Ansprüche, **dadurch gekennzeichnet, dass** die gestapelten Elektroblechlamellen (13) vor dem Einsetzen in den Kessel in einer Folie (15) eingeschweißt werden.

6. Verfahren nach einem der vorhergehenden Ansprüche, **dadurch gekennzeichnet, dass** die vorbestimmte Temperatur in einem Bereich von 150°C und 250°C liegt.

7. Verfahren nach einem der vorhergehenden Ansprüche, **dadurch gekennzeichnet, dass** der innerhalb des Kessels (2) während des Verbackens vorherrschende vorbestimmte Druck in einem Bereich von 5 bis 30 bar liegt.

8. Verfahren nach Anspruch 7, **dadurch gekennzeichnet, dass** der innerhalb des Kessels (2) vorherrschende Druck über eine an den Kessel (2) angeschlossene Druckerhöhungseinrichtung (12) auf den vorbestimmten Druck erhöht wird.

9. Verfahren nach einem der vorhergehenden Ansprüche, **dadurch gekennzeichnet, dass** die vorbestimmte Zeitdauer in einem Bereich zwischen 20 min und 3 Stunden liegt.

10. Vorrichtung (1) zur Durchführung eines Verfahrens nach einem der vorhergehenden Ansprüche, umfassend einen als Druckbehälter ausgebildeten Kessel (2) mit einem Aufnahmeraum (3) zur Aufnahme zu verbackender Blechlamellenstapel, der über eine hermetisch verschließbare Beladeöffnung zugänglich ist, einem Reservoir (9) für ein flüssiges Medium, das über eine Leitung (11) mit dem Aufnahmeraum (3) verbunden ist, einer Pumpen- und Ventilsteuereinrichtung (10), die dazu ausgelegt ist, den Aufnahmeraum (3) mit flüssigem Medium aus dem Reservoir (9) zu befüllen und optional wieder zu entleeren, und einer Heizeinrichtung (8), die dazu ausgelegt ist, im Aufnahmeraum (3) vorhandenes flüssiges Medium zu erhitzen.

11. Vorrichtung (1) nach Anspruch 10, **dadurch gekennzeichnet, dass** diese ein mit einem Heizfluid gefüllten Heizfluidraum (4) aufweist, wobei die Heizeinrichtung (8), der Heizfluidraum (4) und der Aufnahmeraum (3) derart angeordnet sind, dass über die Heizeinrichtung (8) das Heizfluid erhitzt wird, das wiederum seine Wärme an das im Aufnahmeraum (3) enthaltene flüssige Medium abgibt.

12. Vorrichtung (1) nach Anspruch 10 oder 11, **dadurch gekennzeichnet, dass** eine mit dem Aufnahmeraum (3) verbundene Druckerhöhungseinrichtung (12) vorgesehen ist, die dazu ausgelegt ist, den innerhalb des Aufnahmeraums (3) vorherrschen Druck zu erhöhen.
